# EUROPÄISCHE PATENTSCHRIFT

(11) **EP 3 441 156 B1**
(45) Veröffentlichungstag und Bekanntmachung des Hinweises auf die Patenterteilung: **09.10.2019**
(21) Anmeldenummer: 17185483.9
(22) Anmeldetag: 09.08.2017
(51) Int. Cl.: B21J 13/02, B23P 11/02, B21C 3/04, B21C 25/02, B29C 65/64, B29C 65/66, B29C 65/00, B30B 15/02, C22C 47/06

(54) **VERFAHREN ZUR HERSTELLUNG EINER UMFORMMATRIZE ZUM DRUCKUMFORMEN VON WERKSTÜCKEN**
METHODS FOR PRODUCING A MATRIX FOR PRESSURE FORMING OF WORKPIECES
PROCÉDÉS DE FABRICATION D'UNE MATRICE DE FORMAGE SOUS PRESSION DE PIÈCES

(43) Veröffentlichungstag der Anmeldung: 13.02.2019
(73) Patentinhaber: FELSS Systems GmbH, 75203 Königsbach-Stein (DE)
(72) Erfinder: Beihofer, Dennis, 75236 Kämpfelbach (DE); Luther, Torben, 79108 Freiburg (DE); Marré, Michael, 76189 Karlsruhe (DE); Wagner, Henning, 75196 Remchingen (DE); Michi, Werner, 75248 Ölbronn-Dürrn (DE)
(74) Vertreter: Kohler Schmid Möbus Patentanwälte

(56) Entgegenhaltungen:
- WO-A1-02/055257
- DE-A1- 2 506 701
- DE-A1- 19 916 566

## Beschreibung

Die Erfindung betrifft ein Verfahren zur Herstellung einer Umformmatrize zum Druckumformen von Werkstücken, im Rahmen dessen ein Matrizenkern der Umformmatrize an der Außenseite mit einer Kernarmierung in Form eines Armierungskörpers aus faserverstärktem Kunststoff versehen wird derart, dass der auf dem Matrizenkern angeordnete Armierungskörper den Matrizenkern in Umfangsrichtung des Matrizenkerns um eine Arbeitsbewegungsachse des Matrizenkerns umschließt, entlang derer sich im Innern des Matrizenkerns eine Werkstückaufnahme des Matrizenkerns erstreckt, wobei der Armierungskörper eine Kunststoffmatrix und eine Verstärkungsfaserstruktur aufweist, die in die Kunststoffmatrix eingebettet ist und sich in der Umfangsrichtung des Matrizenkerns erstreckt, wobei der Armierungskörper unter Erzeugung einer radialen Vorspannung des Armierungskörpers gegen den Matrizenkern auf den Matrizenkern aufgebracht wird, so dass die auf dem Matrizenkern angeordnete Kernarmierung quer zu der Arbeitsbewegungsachse gegen den Matrizenkern radial vorgespannt ist und wobei der Armierungskörper unter Erzeugung einer radialen Vorspannung des Armierungskörpers gegen den Matrizenkern auf den Matrizenkern aufgebracht wird, indem ein sich senkrecht zu der Arbeitsbewegungsachse erstreckender Kernquerschnitt des Matrizenkerns gegenüber einem bei einem Gebrauchszustand des Matrizenkerns vorliegenden Gebrauchs-Kernquerschnitt auf einen Montage-Kernquerschnitt verkleinert wird.

Die Erfindung betrifft des Weiteren ein Verfahren zur Herstellung einer Umformmatrize zum Druckumformen von Werkstücken, im Rahmen dessen ein Matrizenkern der Umformmatrize an der Außenseite mit einer Kernarmierung in Form eines Armierungskörpers aus faserverstärktem Kunststoff versehen wird derart, dass der auf dem Matrizenkern angeordnete Armierungskörper den Matrizenkern in Umfangsrichtung des Matrizenkerns um eine Arbeitsbewegungsachse des Matrizenkerns umschließt, entlang derer sich im Innern des Matrizenkerns eine Werkstückaufnahme des Matrizenkerns erstreckt, wobei der Armierungskörper eine Kunststoffmatrix und eine Verstärkungsfaserstruktur aufweist, die in die Kunststoffmatrix eingebettet ist und sich in der Umfangsrichtung des Matrizenkerns erstreckt, wobei der Armierungskörper unter Erzeugung einer radialen Vorspannung des Armierungskörpers gegen den Matrizenkern auf den Matrizenkern aufgebracht wird, so dass die auf dem Matrizenkern angeordnete Kernarmierung quer zu der Arbeitsbewegungsachse gegen den Matrizenkern radial vorgespannt ist und wobei der Armierungskörper unter Erzeugung einer radialen Vorspannung des Armierungskörpers gegen den Matrizenkern auf den Matrizenkern aufgebracht wird,
- indem der Armierungskörper als ausgehärteter Hohlkörper hergestellt wird, der in seinem Innern für den Matrizenkern eine Kernaufnahme aufweist, wobei die Kernaufnahme des Armierungskörpers eine sich bei Einbaulage des Matrizenkerns längs der Arbeitsbewegungsachse des Matrizenkerns erstreckende Kernaufnahmeachse aufweist, wobei die Kernaufnahme des Armierungskörpers längs der Kernaufnahmeachse wenigstens einseitig eine Kernaufnahmeöffnung aufweist und wobei die Kernaufnahme des Armierungskörpers in einem Montage-Ausgangszustand des Armierungskörpers einen sich senkrecht zu der Kernaufnahmeachse erstreckenden Ausgangs-Kernaufnahmequerschnitt besitzt,
- indem eine Montagebereitschaft des Armierungskörpers und des Matrizenkerns hergestellt wird und
- indem der montagebereite Armierungskörper und der montagebereite Matrizenkern gefügt werden, wobei der montagebereite Matrizenkern durch die Kernaufnahmeöffnung des montagebereiten Armierungskörpers längs der Kernaufnahmeachse in die Kernaufnahme des montagebereiten Armierungskörpers eingeführt und dadurch der Armierungskörper auf der Außenseite des Matrizenkerns angeordnet wird.

Beim Druckumformen von Werkstücken mittels einer Umformmatrize ist das umzuformende Werkstück in der Werkstückaufnahme im Innern eines Matrizenkerns angeordnet. Die Wand der Werkstückaufnahme des Matrizenkerns ist formgebend ausgebildet und zu diesem Zweck beispielsweise mit einem formgebenden Profil versehen. Während des Umformprozesses werden der Matrizenkern und das im Innern der Werkstückaufnahme des Matrizenkerns angeordnete Werkstück längs einer Arbeitsbewegungsachse des Matrizenkerns relativ zueinander bewegt. Prozessbedingt übt das Werkstück dabei quer zu der Arbeitsbewegungsachse eine große Radialkraft auf den Matrizenkern aus. Um eine unerwünschte Verformung des Matrizenkerns unter der Wirkung der von dem Werkstück ausgeübten Radialkraft zu verhindern, ist der Matrizenkern in Gegenrichtung der von dem Werkstück ausgeübten Radialkraft in Richtung auf die Arbeitsbewegungsachse radial vorgespannt. Zur Erhöhung seiner Lastaufnahmefähigkeit ist der Matrizenkern mit einer Kernarmierung versehen, welche den Matrizenkern an dessen Außenseite in Umfangsrichtung um die Arbeitsbewegungsachse umschließt.

Gattungsgemäßer Stand der Technik ist offenbart in DE 25 06 701 A1. Diese Druckschrift betrifft ein Umformwerkzeug, das eine Matrize, eine Matrizenarmierung sowie einen zwischen der Matrize und der Matrizenarmierung angeordneten hülsenförmigen Körper umfasst. Die Matrizenarmierung besteht vorzugsweise aus Kohlenstofffasern, die in ein Bindemittel eingebettet sind. Bei der Herstellung des Umformwerkzeugs wird die Matrize im unterkühlten Zustand in die als Armierungsring vorliegende Matrizenarmierung eingeschoben.

Weiterer Stand der Technik ist bekannt aus WO 99/39848 A1. Im Falle dieses Standes der Technik ist ein Matrizenkern im Innern eines mit dem Matrizenkern koaxialen Spannrings angeordnet. Der Spannring wiederum wird von einer mit dem Spannring und dem Matrizenkern koaxialen ringartigen Bandarmierung aus Stahl in Umfangsrichtung umschlossen. Die Bandarmierung ist quer zu der Arbeitsbewegungsachse des Matrizenkerns gegen den Spannring und über den Spannring auch gegen den Matrizenkern radial vorgespannt. Zur Aufnahme großer Radialkräfte sind Umformmatrizen der aus WO 99/39848 A1 vorbekannten Art mit einer groß bauenden und entsprechend massebehafteten Armierung zu versehen. An einer Umformmaschine benötigen derartige Umformmatrizen einen großen Einbauraum, ihr Handling wird durch ihre große Masse erschwert.

Die Aufgabe der vorliegenden Erfindung besteht darin, ein gegenüber dem gattungsgemäßen Stand der Technik vereinfachtes Verfahren zur Herstellung einer Umformmatrize zum Druckumformen von Werkstücken bereitzustellen.

Erfindungsgemäß gelöst wird diese Aufgabe durch das Verfahren gemäß Patentanspruch 1 und durch das Verfahren gemäß Patentanspruch 2.

Für den Matrizenkern der anspruchsgemäß hergestellten Umformmatrize ist eine Kernarmierung vorgesehen, die einen gegen den Matrizenkern radial vorgespannten Armierungskörper aus faserverstärktem Kunststoff aufweist. Der Armierungskörper umfasst eine Kunststoffmatrix sowie eine in die Kunststoffmatrix eingebettete und sich in der Umfangsrichtung des Matrizenkerns um dessen Arbeitsbewegungsachse erstreckende Verstärkungsfaserstruktur. Im Rahmen der anspruchsgemäßen Herstellungsverfahren wird auf den Matrizenkern der Umformmatrize als Kernarmierung ein Armierungskörper aus faserverstärktem Kunststoff unter Erzeugung einer radialen Vorspannung des Armierungskörpers gegen den Matrizenkern auf die Außenseite des Matrizenkerns aufgebracht.

Die Verstärkungsfaserstruktur des Armierungskörpers kann Kurz-, Lang- oder Endlosfasern aufweisen. Als Kunststoffmatrix des Armierungskörpers kommt insbesondere eine polymere Matrix aus Duromeren oder Thermoplasten infrage.

Der aus faserverstärktem Kunststoff bestehende Armierungskörper zeichnet sich durch eine große Lastaufnahmefähigkeit bei gleichzeitig geringem Volumen und geringer Masse aus. Aufgrund der geringen Baugröße lässt sich die anspruchsgemäß hergestellte Umformmatrize an einer Umformmaschine platzsparend unterbringen. Die reduzierte Masse der Umformmatrize ist beispielsweise bei deren Handling im Rahmen eines Werkzeugwechsels von erheblichem Vorteil. Zudem sind derartige Umformmatrizen kostengünstiger als herkömmliche Umformmatrizen zum Druckumformen von Werkstücken.

Im Rahmen des erfindungsgemäßen Herstellungsverfahrens gemäß Patentanspruch 1 wird zur Erstellung eines gegen den Matrizenkern radial vorgespannten Armierungskörpers faserverstärkter Kunststoff im nicht ausgehärteten Zustand auf die Außenseite des Matrizenkerns aufgebracht, wobei der Matrizenkern zum Zeitpunkt des Aufbringens des faserverstärkten Kunststoffs einen Montage-Kernquerschnitt aufweist, der kleiner ist als ein bei einem Gebrauchszustand des Matrizenkerns vorliegender Gebrauchs-Kernquerschnitt. Nach dem Aushärten des im nassen Zustand aufgebrachten faserverstärkten Kunststoffs wird der für die Montage reduzierte Querschnitt des Matrizenkerns auf denjenigen Querschnitt vergrößert, welchen der Matrizenkern bei der Werkstückumformung aufweist. Mit der bei ausgehärtetem Armierungskörper erfolgenden Querschnittsvergrößerung des Matrizenkerns verbunden ist die Erzeugung einer radialen Vorspannung des ausgehärteten Armierungskörpers gegen den Matrizenkern.

Alternativ liegt im Rahmen des Herstellungsverfahrens gemäß Patentanspruch 2 der Armierungskörper vor dem Aufbringen auf den Matrizenkern als ausgehärteter Hohlkörper vor. In seinem Innern weist der ausgehärtete Armierungskörper eine Kernaufnahme für den Matrizenkern der erfindungsgemäßen Umformmatrize auf. Eine Kernaufnahmeachse des Armierungskörpers erstreckt sich bei Einbaulage des Matrizenkerns im Innern des Armierungskörpers längs der Arbeitsbewegungsachse des Matrizenkerns. Längs der Kernaufnahmeachse weist die Kernaufnahme des Armierungskörpers wenigstens einseitig eine Kernaufnahmeöffnung auf. In einem Montage-Ausgangszustand des Armierungskörpers besitzt dessen Kernaufnahme einen Ausgangs-Kernaufnahmequerschnitt. Erfindungsgemäß wird zur Herstellung einer Montagebereitschaft des Armierungskörpers und des Matrizenkerns der Kernaufnahmequerschnitt gegenüber dem Ausgangs-Kernaufnahmequerschnitt vergrößert. Dadurch wird erreicht, dass der Kernaufnahmequerschnitt des montagebereiten Armierungskörpers derart bemessen ist, dass der Kernquerschnitt des montagebereiten Matrizenkerns in der senkrechten Projektion auf den Kernaufnahmequerschnitt innerhalb des Kernaufnahmequerschnitts liegt und folglich der Matrizenkern zum Aufbringen des Armierungskörpers in die Kernaufnahme des Armierungskörpers eingeführt werden kann. Nach der Herstellung der Montagebereitschaft des Armierungskörpers und des Matrizenkerns werden der montagebereite Armierungskörper und der montagebereite Matrizenkern entsprechend gefügt. Dabei werden der Armierungskörper und der Matrizenkern relativ zueinander längs der Kernaufnahmeachse des Armierungskörpers beziehungsweise längs der Arbeitsbewegungsache des Matrizenkerns bewegt. Ist der Armierungskörper nach dem Fügevorgang auf der Außenseite des Matrizenkerns in der Sollposition angeordnet, wird schließlich der Kernaufnahmequerschnitt des Armierungskörpers verkleinert. Dadurch wird eine radiale Vorspannung des Armierungskörpers gegen den Matrizenkern erzeugt.

Besondere Ausführungsarten der erfindungsgemäßen Herstellungsverfahren nach den Patentansprüchen 1 und 2 ergeben sich aus den abhängigen Patentansprüchen 3 bis 8.

In Weiterbildung des erfindungsgemäßen Verfahrens nach Patentanspruch 2 wird ausweislich Patentanspruch 3 zur Herstellung einer Montagebereitschaft des Armierungskörpers und des Matrizenkerns der Kernaufnahmequerschnitt des Armierungskörpers gegenüber dem Ausgangs-Kernaufnahmequerschnitt vergrößert und außerdem der Kernquerschnitt des Matrizenkerns gegenüber dem Gebrauchs-Kernquerschnitt verkleinert. Ist der Armierungskörper nach dem Fügevorgang auf der Außenseite des Matrizenkerns in der Sollposition angeordnet, wird schließlich der Kernaufnahmequerschnitt des Armierungskörpers verkleinert und außerdem wird der Kernquerschnitt des Matrizenkerns vergrö-ßert. Dadurch wird eine radiale Vorspannung des Armierungskörpers gegen den Matrizenkern erzeugt.

Gemäß Patentanspruch 4 wird in bevorzugter Ausgestaltung der erfindungsgemäßen Herstellungsverfahren nach den Patentansprüchen 1 und 2 der Armierungskörper aus faserverstärktem Kunststoff unmittelbar auf den Matrizenkern aufgebracht. Infolgedessen ergibt sich als Umformmatrize eine besonders kompakt bauende Einheit aus Matrizenkern und Armierungskörper.

Sowohl im Rahmen des erfindungsgemäßen Herstellungsverfahrens gemäß Patentanspruch 1 als auch im Rahmen des erfindungsgemäßen Herstellungsverfahrens gemäß Patentanspruch 3 bedarf es einer Verkleinerung des Kernquerschnitts des Matrizenkerns gegenüber dem Gebrauchs-Kernquerschnitt. In vorteilhafter Ausgestaltung der erfindungsgemäßen Herstellungsverfahren wird zu diesem Zweck der Matrizenkern gegenüber seinem Gebrauchszustand längs der Arbeitsbewegungsachse des Matrizenkerns gelängt, vorzugsweise elastisch gelängt (Patentanspruch 5) und/oder die Temperatur des Matrizenkerns wird gegenüber der Temperatur bei Gebrauchszustand des Matrizenkerns verändert, bei entsprechendem Temperaturverhalten des Werkstoffs des Matrizenkerns reduziert (Patentanspruch 6).

Zur Vergrößerung des Kernaufnahmequerschnitts des Armierungskörpers gegenüber dem Ausgangs-Kernaufnahmequerschnitt im Rahmen des erfindungsgemäßen Herstellungsverfahrens gemäß Patentanspruch 2 wird in weiterer vorteilhafter Ausgestaltung des erfindungsgemäßen Herstellungsverfahrens die Temperatur des als ausgehärteter Hohlkörper vorliegenden Armierungskörpers gegenüber der Temperatur bei Montage-Ausgangszustand des Armierungskörpers verändert, je nach Temperaturverhalten des Armierungskörpers erhöht oder gesenkt (Patentanspruch 7).

Im Rahmen der erfindungsgemäßen Herstellungsverfahren können für den Armierungskörper der erfindungsgemäßen Umformmatrize verschiedenartige faserverstärkte Kunststoffe verwendet werden. Patentanspruch 8 betrifft ein erfindungsgemäßes Herstellungsverfahren, im Rahmen dessen ein Armierungskörper aus kohlenstofffaserverstärktem Kunststoff (CFK) unter Erzeugung einer radialen Vorspannung des Armierungskörpers gegen den Matrizenkern auf den Matrizenkern aufgebracht wird. Kohlenstofffaserverstärkte Kunststoffe zeichnen sich durch eine besonders hohe Zugfestigkeit bei geringer Dichte aus. Die sich in der Umfangsrichtung des Matrizenkerns erstreckende Verstärkungsfaserstruktur eines auf den Matrizenkern aufgebrachten Armierungskörpers aus kohlenstofffaserverstärktem Kunststoff gestattet bei besonders leichter Bauweise eine besonders wirksame Vorspannung des Armierungskörpers gegen den Matrizenkern der erfindungsgemäßen Umformmatrize.

Werden im Rahmen des erfindungsgemäßen Herstellungsverfahrens gemäß Patentanspruch 3 ein Armierungskörper aus kohlenstofffaserverstärktem Kunststoff (negativer Wärmeausdehnungskoeffizient) und ein Matrizenkern aus einem Material mit einem positiven Wärmeausdehnungskoeffizienten, beispielsweise aus Stahl, gefügt und werden zur Herstellung der Montagebereitschaft des Armierungskörpers und des Matrizenkerns und/oder zur Erzeugung der radialen Vorspannung des Armierungskörpers gegen den Matrizenkern die Temperaturen des Armierungskörpers und des Matrizenkerns verändert, so kann jeweils eine gleichsinnige Temperaturänderung der beiden Teile der erfindungsgemäßen Umformmatrize vorgenommen werden. Aufgrund des Temperaturverhaltens der Werkstoffe des Armierungskörpers und des Matrizenkerns sind die beiderseitigen Temperaturen zur Herstellung der Montagebereitschaft zu senken und zur Erzeugung der radialen Vorspannung des Armierungskörpers gegen den Matrizenkern zu erhöhen.

Nachfolgend wird die Erfindung anhand beispielhafter schematischer Darstellungen näher erläutert. Es zeigen:
- Figuren 1a, 1b: Schnittdarstellungen einer Umformmatrize zum Druckumformen von Werkstücken, mit einem Matrizenkern und einer Kernarmierung,
- Figur 2: den Ablauf einer ersten Variante eines Verfahrens zur Herstellung der Umformmatrize gemäß den Figuren la, 1b und
- Figur 3: den Ablauf einer zweiten Variante des Verfahrens zur Herstellung der Umformmatrize gemäß den Figuren la, 1b.

Gemäß den Figuren la, 1b umfasst eine Umformmatrize 1 zum Druckumformen, vorliegend zum Axialformen von Werkstücken einen Matrizenkern 2 aus Stahl sowie einen Armierungskörper 3 aus kohlenstofffaserfaserverstärktem Kunststoff (CFK). Der Matrizenkern 2 ist hohlzylindrisch ausgebildet und weist in seinem Innern eine Werkstückaufnahme 4 auf. Die Werkstückaufnahme 4 erstreckt sich längs einer Arbeitsbewegungsachse 5 des Matrizenkerns 2, welche die Symmetrieachse des Matrizenkerns 2 bildet. Eine die Werkstückaufnahme 4 begrenzende achsparallele Innenwand 6 des Matrizenkerns 2 ist in gewohnter Weise mit einem in den Figuren la, 1b nicht gezeigten formgebenden Profil versehen. Eine achsparallele Außenwand des Matrizenkerns 2 begrenzt einen Kernquerschnitt QM des Matrizenkerns 2.

Zum Druckumformen von Werkstücken, beispielsweise von Rohren, mittels der Umformmatrize 1 werden das im Innern der Werkstückaufnahme 4 angeordnete Werkstück und die Umformmatrize 1 wie üblich längs der Arbeitsbewegungsachse 5 relativ zueinander bewegt. Dabei wird das Werkstück durch das formgebende Profil des Matrizenkerns 2 über die Fließgrenze hinaus beansprucht und dadurch umgeformt.

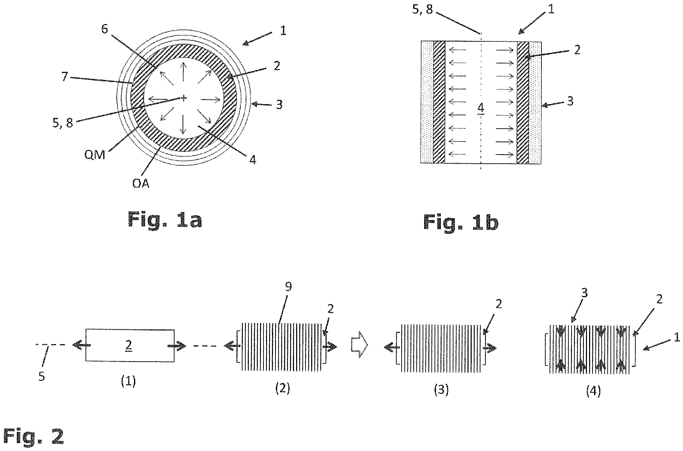

Prozessbedingt übt das Werkstück bei seiner Umformung eine große Radialkraft auf den Matrizenkern 2 aus. Die Wirkrichtung der von dem Werkstück auf den Matrizenkern 2 ausgeübten Radialkraft ist in den Figuren 1a, 1b durch Pfeile veranschaulicht.

Damit der Matrizenkern 2 unter der Wirkung der von dem Werkstück ausgeübten Radialkraft nicht in unerwünschter Weise verformt wird und zur Erhöhung der Lastaufnahmefähigkeit des Matrizenkerns 2 ist der Armierungskörper 3 vorgesehen. Der Armierungskörper 3 ist in dem dargestellten Beispielsfall nach Art eines CFK-Rohrs mit einer gewickelten Endlosfaserstruktur ausgebildet.

Der Matrizenkern 2 ist in einer Kernaufnahme 7 des Armierungskörpers 3 angeordnet. Eine Kernaufnahmeachse 8 des Armierungskörpers 3 fällt bei Einbaulage des Matrizenkerns 2 in der Kernaufnahme 7 des Armierungskörpers 3 mit der Arbeitsbewegungsachse 5 des Matrizenkerns 2 zusammen. Eine achsparallele Innenwand der Kernaufnahme 7 begrenzt einen Kernaufnahmequerschnitt QA des Armierungskörpers 3.

In den Figuren 1a, 1b befindet sich die Umformmatrize 1 und mit dieser der Matrizenkern 2 und der Armierungskörper 3 im Gebrauchszustand, in welchem mit der Umformmatrize 1 ein Umformprozess durchgeführt werden kann. Der Armierungskörper 3 ist entgegen der Richtung der während des Umformprozesses von dem Werkstück auf den Matrizenkern 2 ausgeübten Radialkraft gegen den Matrizenkern 2 radial vorgespannt. Der Matrizenkern 2 weist einen Gebrauchs-Kernquerschnitt, die Kernaufnahme 7 des Armierungskörpers 3 einen Gebrauchs-Kernaufnahmequerschnitt auf.

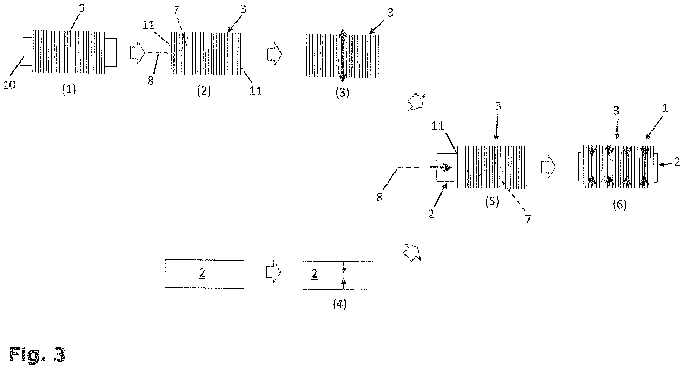

Zwei Möglichkeiten zur Herstellung der Umformmatrize 1 sind in den Figuren 2 und 3 veranschaulicht.

Gemäß Figur 2 wird zur Herstellung der Umformmatrize 1 zunächst der Matrizenkern 2 längs der Arbeitsbewegungsachse 5 elastisch gelängt (Verfahrensschritt(1) in Figur 2). Dadurch erhält der Matrizenkern 2 als Kernquerschnitt QM einen Montage-Kernquerschnitt, der kleiner ist als der Gebrauchs-Kernquerschnitt.

Anschließend wird auf die Außenseite des querschnittsreduzierten Matrizenkerns 2 faserverstärkter Kunststoff im nassen Zustand derart aufgebracht, dass sich eine in Figur 2 stark schematisch dargestellte Verstärkungsfaserstruktur 9 des faserverstärkten Kunststoffs mit Endlosfasern aus Kohlenstoff in der Umfangsrichtung des Matrizenkerns 2 um die Arbeitsbewegungsachse 5 erstreckt (Verfahrensschritt (2) in Figur 2). In dem dargestellten Beispielsfall ist die Verstärkungsfaserstruktur 9 mit Endlosfasern aus Kohlenstoff in eine thermoplastische Matrix (beispielsweise Polysulfon/PSU) des faserverstärkten Kunststoffs eingebettet.

Bei nach wie vor querschnittsreduziertem Matrizenkern 2 wird der anfangs nasse faserverstärkte Kunststoff getempert und dadurch ausgehärtet (Verfahrensschritt (3) in Figur 2). Nach dem Aushärten des faserverstärkten Kunststoffs wird die Längung des Matrizenkerns 2 aufgehoben (Verfahrensschritt (4) in Figur 2). Infolgedessen vergrößert sich der Kernquerschnitt QM des Matrizenkerns 2 auf den Gebrauchs-Kernquerschnitt. Dadurch ergibt sich eine radiale Vorspannung (Pfeile in der Teildarstellung (4) von Figur 2) des durch Aushärten des faserverstärkten Kunststoffs erzeugten Armierungskörpers 3 gegen den Matrizenkern 2. Die Herstellung der Umformmatrize 1 ist damit abgeschlossen.

Abweichend von der in Figur 2 veranschaulichten Variante des Verfahrens zur Herstellung der Umformmatrize 1 wird im Falle des Herstellungsverfahrens gemäß Figur 3 der Armierungskörper 3 vor dem Aufbringen auf den Matrizenkern 2 von diesem getrennt gefertigt. Zu diesem Zweck wird faserverstärkter Kunststoff abseits des Matrizenkerns 2 im nassen Zustand auf einen Dorn 10 derart aufgebracht, dass sich die Verstärkungsfaserstruktur 9 des faserverstärkten Kunststoffs in Umfangsrichtung des Dorns 10 um diesen herum erstreckt (Verfahrensschritt (1) in Figur 3). Durch Tempern des anfangs nassen faserverstärkten Kunststoffs wird dieser unter Ausbildung des Armierungskörpers 3 ausgehärtet. Der ausgehärtete Armierungskörper 3 wird von dem Dorn 10 abgezogen (Verfahrensschritt (2) in Figur 3). Im Innern des ausgehärteten Armierungskörpers 3 ist dort, wo zuvor der Dorn 10 angeordnet war die Kernaufnahme 7 ausgebildet, die längs der Kernaufnahmeachse 8 beidseits jeweils eine Kernaufnahmeöffnung 1 aufweist. Als Kernaufnahmequerschnitt QA weist die Kernaufnahme 7 des Armierungskörpers 3 in dieser Phase des veranschaulichten Herstellungsverfahrens einen Ausgangs-Kernaufnahmequerschnitt auf.

Nachdem der Armierungskörper 3 als ausgehärteter Hohlkörper bereitgestellt worden ist, wird die Temperatur des Armierungskörpers 3 geändert, in dem dargestellten Beispielsfall wird der Armierungskörper 3 abgekühlt. Aufgrund des entsprechenden Temperaturverhaltens des vorliegend eingesetzten kohlenstofffaserverstärkten Kunststoffs führt die Abkühlung zu einer Aufweitung des Armierungskörpers 3 und damit verbunden zu einer Vergrößerung des Kernaufnahmequerschnitts QA des Armierungskörpers 3 gegenüber dem Ausgangs-Kernaufnahmequerschnitt (Arbeitsschritt (3) in Figur 3). Damit ist der Armierungskörper 3 montagebereit.

Zur Herstellung der Montagebereitschaft des Matrizenkerns 2 wird der Matrizenkern 2 ausgehend von seinem Gebrauchszustand abgekühlt. Dadurch wird der Kernquerschnitt QM des Matrizenkerns 2 gegenüber dem Gebrauchs-Kernquerschnitt verkleinert (Arbeitsschritt (4) in Figur 3). Damit ist auch der Matrizenkern 2 montagebereit.

Der Kernquerschnitt QM des montagebereiten Matrizenkerns 2 ist kleiner als der Kernaufnahmequerschnitt QA des montagebereiten Armierungskörpers 2, wobei der Kernquerschnitt QM des montagebereiten Matrizenkerns 2 in der senkrechten Projektion auf den Kernaufnahmequerschnitt QA des montagebereiten Armierungskörpers 3 innerhalb des Kernaufnahmequerschnitts QA des montagebereiten Armierungskörpers 3 liegt.

Nach der Herstellung der Montagebereitschaft des Armierungskörpers 3 und des Matrizenkerns 2 werden der Armierungskörper 3 und der Matrizenkern 2 gefügt, indem der montagebereite Matrizenkern 2 durch eine der Kernaufnahmeöffnungen 11 des Armierungskörpers 3 längs der Kernaufnahmeachse 8 in die Kernaufnahme 7 des Armierungskörpers 3 eingeschoben wird (Arbeitsschritt (5) in Figur 3).

Nachdem der Matrizenkern 2 seine Sollposition im Innern des Armierungskörpers 3 eingenommen hat, wird die Einheit aus Armierungskörper 3 und Matrizenkern 2 erwärmt (Arbeitsschritt (6) in Figur 3). Aufgrund der Erwärmung vergrößert sich der Kernquerschnitt QM des Matrizenkerns 2, während sich der Kernaufnahmequerschnitt QA des Armierungskörpers 3 verkleinert. In Folge der Vergrößerung des Kernquerschnitts QM des Matrizenkerns 2 bei gleichzeitiger Verkleinerung des Kernaufnahmequerschnitts QA des Armierungskörpers 3 ist der Armierungskörper 3 radial gegen den Matrizenkörper 2 vorgespannt. Die Herstellung der Umformmatrize 1 ist abgeschlossen.

## Patentansprüche

1. Verfahren zur Herstellung einer Umformmatrize (1) zum Druckumformen von Werkstücken, im Rahmen dessen ein Matrizenkern (2) der Umformmatrize (1) an der Au-ßenseite mit einer Kernarmierung in Form eines Armierungskörpers (3) aus faserverstärktem Kunststoff versehen wird derart, dass der auf dem Matrizenkern (2) angeordnete Armierungskörper (3) den Matrizenkern (2) in Umfangsrichtung des Matrizenkerns (2) um eine Arbeitsbewegungsachse (5) des Matrizenkerns (2) umschließt, entlang derer sich im Innern des Matrizenkerns (2) eine Werkstückaufnahme (4) des Matrizenkerns (2) erstreckt, wobei der Armierungskörper (3) eine Kunststoffmatrix und eine Verstärkungsfaserstruktur (9) aufweist, die in die Kunststoffmatrix eingebettet ist und sich in der Umfangsrichtung des Matrizenkerns (2) erstreckt, wobei der Armierungskörper (3) unter Erzeugung einer radialen Vorspannung des Armierungskörpers (3) gegen den Matrizenkern (2) auf den Matrizenkern (2) aufgebracht wird, so dass die auf dem Matrizenkern (2) angeordnete Kernarmierung quer zu der Arbeitsbewegungsachse (5) gegen den Matrizenkern (2) radial vorgespannt ist und wobei der Armierungskörper (3) unter Erzeugung einer radialen Vorspannung des Armierungskörpers (3) gegen den Matrizenkern (2) auf den Matrizenkern (2) aufgebracht wird, indem ein sich senkrecht zu der Arbeitsbewegungsachse (5) erstreckender Kernquerschnitt (QM) des Matrizenkerns (2) gegenüber einem bei einem Gebrauchszustand des Matrizenkerns (2) vorliegenden Gebrauchs-Kernquerschnitt auf einen Montage-Kernquerschnitt verkleinert wird,
**dadurch gekennzeichnet, dass** der Armierungskörper (3) unter Erzeugung einer radialen Vorspannung des Armierungskörpers (3) gegen den Matrizenkern (2) auf den Matrizenkern (2) aufgebracht wird,
• indem der faserverstärkte Kunststoff im nicht ausgehärteten Zustand auf die Au-ßenseite des den Montage-Kernquerschnitt aufweisenden Matrizenkerns (2) aufgebracht wird, derart, dass sich die Verstärkungsfaserstruktur (9) des faserverstärkten Kunststoffs in der Umfangsrichtung des den Montage-Kernquerschnitt aufweisenden Matrizenkerns (2) erstreckt und
• indem der Kernquerschnitt (QM) des Matrizenkerns (2) nach dem Aushärten des auf die Außenseite des Matrizenkerns (2) aufgebrachten faserverstärkten Kunststoffs auf den Gebrauchs-Kernquerschnitt vergrößert wird.

2. Verfahren zur Herstellung einer Umformmatrize (1) zum Druckumformen von Werkstücken, im Rahmen dessen ein Matrizenkern (2) der Umformmatrize (1) an der Außenseite mit einer Kernarmierung in Form eines Armierungskörpers (3) aus faserverstärktem Kunststoff versehen wird derart, dass der auf dem Matrizenkern (2) angeordnete Armierungskörper (3) den Matrizenkern (2) in Umfangsrichtung des Matrizenkerns (2) um eine Arbeitsbewegungsachse (5) des Matrizenkerns (2) umschließt, entlang derer sich im Innern des Matrizenkerns (2) eine Werkstückaufnahme (4) des Matrizenkerns (2) erstreckt, wobei der Armierungskörper (3) eine Kunststoffmatrix und eine Verstärkungsfaserstruktur (9) aufweist, die in die Kunststoffmatrix eingebettet ist und sich in der Umfangsrichtung des Matrizenkerns (2) erstreckt, wobei der Armierungskörper (3) unter Erzeugung einer radialen Vorspannung des Armierungskörpers (3) gegen den Matrizenkern (2) auf den Matrizenkern (2) aufgebracht wird, so dass die auf dem Matrizenkern (2) angeordnete Kernarmierung quer zu der Arbeitsbewegungsachse (5) gegen den Matrizenkern (2) radial vorgespannt ist und wobei der Armierungskörper (3) unter Erzeugung einer radialen Vorspannung des Armierungskörpers (3) gegen den Matrizenkern (2) auf den Matrizenkern (2) aufgebracht wird,
• indem der Armierungskörper (3) als ausgehärteter Hohlkörper hergestellt wird, der in seinem Innern für den Matrizenkern (2) eine Kernaufnahme (7) aufweist, wobei die Kernaufnahme (7) des Armierungskörpers (3) eine sich bei Einbaulage des Matrizenkerns (2) längs der Arbeitsbewegungsachse (5) des Matrizenkerns (2) erstreckende Kernaufnahmeachse (8) aufweist, wobei die Kernaufnahme (7) des Armierungskörpers (3) längs der Kernaufnahmeachse (8) wenigstens einseitig eine Kernaufnahmeöffnung (11) aufweist und wobei die Kernaufnahme (7) des Armierungskörpers (3) in einem Montage-Ausgangszustand des Armierungskörpers (3) einen sich senkrecht zu der Kernaufnahmeachse (8) erstreckenden Ausgangs-Kernaufnahmequerschnitt besitzt,
• indem eine Montagebereitschaft des Armierungskörpers (3) und des Matrizenkerns (2) hergestellt wird und
• indem der montagebereite Armierungskörper (3) und der montagebereite Matrizenkern (2) gefügt werden, wobei der montagebereite Matrizenkern (2) durch die Kernaufnahmeöffnung (11) des montagebereiten Armierungskörpers (3) längs der Kernaufnahmeachse (8) in die Kernaufnahme (7) des montagebereiten Armierungskörpers (3) eingeführt und dadurch der Armierungskörper (3) auf der Außenseite des Matrizenkerns (2) angeordnet wird,
**dadurch gekennzeichnet, dass** der Armierungskörper (3) unter Erzeugung einer radialen Vorspannung des Armierungskörpers (3) gegen den Matrizenkern (2) auf den Matrizenkern (2) aufgebracht wird,
• indem die Montagebereitschaft des Armierungskörpers (3) und des Matrizenkerns (2) hergestellt wird, indem der Kernaufnahmequerschnitt (QA) des Armierungskörpers (3) gegenüber dem Ausgangs-Kernaufnahmequerschnitt vergrößert wird, wobei der Kernaufnahmequerschnitt (QA) des montagebereiten Armierungskörpers (3) derart bemessen ist, dass der Kernquerschnitt (QM) des montagebereiten Matrizenkerns (2) in der senkrechten Projektion auf den Kernaufnahmequerschnitt (QA) innerhalb des Kernaufnahmequerschnitts (QA) liegt und
• indem nach dem Fügen des Armierungskörpers (3) und des Matrizenkerns (2) unter Erzeugung der radialen Vorspannung des Armierungskörpers (3) gegen den Matrizenkern (2) der Kernaufnahmequerschnitt (QA) des Armierungskörpers (3) verkleinert wird.

3. Verfahren nach Anspruch 2, **dadurch gekennzeichnet dass** der Armierungskörper (3) unter Erzeugung einer radialen Vorspannung des Armierungskörpers (3) gegen den Matrizenkern (2) auf den Matrizenkern (2) aufgebracht wird,
• indem zur Herstellung der Montagebereitschaft des Armierungskörpers (3) und des Matrizenkerns (2) der Kernquerschnitt (QM) des Matrizenkerns (2) gegenüber einem bei einem Gebrauchszustand des Matrizenkerns (2) vorliegenden Gebrauchs-Kernquerschnitt verkleinert wird und
• indem nach dem Fügen des Armierungskörpers (3) und des Matrizenkerns (2) unter Erzeugung der radialen Vorspannung des Armierungskörpers (3) gegen den Matrizenkern (2) der Kernaufnahmequerschnitt (QA) des Armierungskörpers (3) verkleinert und der Kernquerschnitt (QM) des Matrizenkerns (2) vergrößert wird.

4. Verfahren nach einem der vorhergehenden Ansprüche, **dadurch gekennzeichnet, dass** der Armierungskörper (3) aus faserverstärktem Kunststoff unter Erzeugung einer radialen Vorspannung des Armierungskörpers (3) gegen den Matrizenkern (2) unmittelbar auf den Matrizenkern (2) aufgebracht wird.

5. Verfahren wenigstens nach Anspruch 1 oder Anspruch 3, **dadurch gekennzeichnet, dass** der Kernquerschnitt (QM) des Matrizenkerns (2) gegenüber dem Gebrauchs-Kernquerschnitt verkleinert wird, indem der Matrizenkern (2) gegenüber dem Gebrauchszustand längs der Arbeitsbewegungsachse (5) des Matrizenkerns (2) gelängt, vorzugsweise elastisch gelängt, wird.

6. Verfahren wenigstens nach Anspruch 1 oder Anspruch 3, **dadurch gekennzeichnet, dass** der Kernquerschnitt (QM) des Matrizenkerns (2) gegenüber dem Gebrauchs-Kernquerschnitt verkleinert wird, indem die Temperatur des Matrizenkerns (2) gegenüber der Temperatur bei Gebrauchszustand des Matrizenkerns (2) verändert wird.

7. Verfahren wenigstens nach Anspruch 2 oder Anspruch 3, **dadurch gekennzeichnet, dass** der Kernaufnahmequerschnitt (QA) des Armierungskörpers (3) gegenüber dem Ausgangs-Kernaufnahmequerschnitt vergrößert wird, indem die Temperatur des Armierungskörpers (3) gegenüber der Temperatur bei Montage-Ausgangszustand des Armierungskörpers (3) verändert wird.

8. Verfahren nach einem der vorhergehenden Ansprüche, **dadurch gekennzeichnet, dass** ein Armierungskörper (3) aus kohlenstofffaserverstärktem Kunststoff unter Erzeugung einer radialen Vorspannung des Armierungskörpers (3) gegen den Matrizenkern (2) auf den Matrizenkern (2) aufgebracht wird.

## Claims

1. Method for producing a forming die (1) for pressure-forming workpieces, in which a die core (2) of the forming die (1) is provided at the outer side with a core reinforcement in the form of a reinforcement body (3) made of a fibre-reinforced plastics material in such a manner that the reinforcement body (3) arranged on the die core (2) surrounds the die core (2) in a peripheral direction of the die core (2) around a working movement axis (5) of the die core (2), along which working movement axis a workpiece receiving member (4) of the die core (2) extends inside the die core (2), wherein the reinforcement body (3) comprises a plastics matrix and a reinforcing fibre structure (9) which is embedded in the plastics matrix and which extends in the peripheral direction of the die core (2) wherein the reinforcement body (3) is applied to the die core (2) so as to produce a radial pretensioning of the reinforcement body (3) against the die core (2) such that the core reinforcement which is arranged on the die core (2) is radially pretensioned transversely to the working movement axis (5) against the die core (2), and wherein the reinforcement body (3) is applied to the die core (2) so as to produce a radial pretensioning of the reinforcement body (3) against the die core (2) by a core cross-section (QM) of the die core (2) which extends perpendicularly to the working movement axis (5) being decreased to an assembly core cross-section with respect to a core cross-section for use which is present in a state for use of the die core (2),
**characterised in that** the reinforcement body (3) is applied to the die core (2) so as to produce a radial pretensioning of the reinforcement body (3) against the die core (2)
• by the fibre-reinforced plastics material in the non-hardened state being applied to the outer side of the die core (2) which has the assembly core cross-section in such a manner that the reinforcing fibre structure (9) of the fibre-reinforced plastics material extends in the peripheral direction of the die core (2) which has the assembly core cross-section and
• by the core cross-section (QM) of the die core (2) being increased to the core cross-section for use after the hardening of the fibre-reinforced plastics material applied to the outer side of the die core (2).

2. Method for producing a forming die (1) for pressure-forming workpieces, in which a die core (2) of the forming die (1) is provided at the outer side with a core reinforcement in the form of a reinforcement body (3) made of a fibre-reinforced plastics material in such a manner that the reinforcement body (3) arranged on the die core (2) surrounds the die core (2) in a peripheral direction of the die core (2) around a working movement axis (5) of the die core (2), along which working movement axis a workpiece receiving member (4) of the die core (2) extends inside the die core (2), wherein the reinforcement body (3) comprises a plastics matrix and a reinforcing fibre structure (9) which is embedded in the plastics matrix and which extends in the peripheral direction of the die core (2) wherein the reinforcement body (3) is applied to the die core (2) so as to produce a radial pretensioning of the reinforcement body (3) against the die core (2) such that the core reinforcement which is arranged on the die core (2) is radially pretensioned transversely to the working movement axis (5) against the die core (2), and wherein the reinforcement body (3) is applied to the die core (2) so as to produce a radial pretensioning of the reinforcement body (3) against the die core (2)
• by the reinforcement body (3) being produced as a hardened hollow member which has in the interior thereof a core receiving member (7) for the die core (2), wherein the core receiving member (7) of the reinforcement body (3) has a core receiving member axis (8) which extends along the working movement axis (5) of the die core (2) when the die core (2) is in the mounting position, wherein the core receiving member (7) of the reinforcement body (3) has along the core receiving member axis (8) a core receiving member opening (11) at least at one side and wherein, in an initial assembly state of the reinforcement body (3), the core receiving member (7) of the reinforcement body (3) has an initial core receiving member cross-section which extends perpendicularly to the core receiving member axis (8),
• by a readiness for assembly of the reinforcement body (3) and the die core (2) being produced and
• by the ready-for-assembly reinforcement body (3) and the ready-for-assembly die core (2) being joined, wherein the ready-for-assembly die core (2) is introduced through the core receiving member opening (11) of the ready-for-assembly reinforcement body (3) along the core receiving member axis (8) into the core receiving member (7) of the ready-for-assembly reinforcement body (3) and the reinforcement body (3) is thereby arranged at the outer side of the die core (2),
**characterised in that** the reinforcement body (3) is applied to the die core (2) so as to produce a radial pretensioning of the reinforcement body (3) against the die core (2)
• by the readiness for assembly of the reinforcement body (3) and the die core (2) being produced by the core receiving member cross-section (QA) of the reinforcement body (3) being increased with respect to the initial core receiving member cross-section, wherein the core receiving member cross-section (QA) of the ready-for-assembly reinforcement body (3) has such dimensions that the core cross-section (QM) of the ready-for-assembly die core (2) is, in the perpendicular projection onto the core receiving member cross-section (QA), within the core receiving member cross-section (QA), and
• by, after the reinforcement body (3) and the die core (2) have been joined so as to produce the radial pretensioning of the reinforcement body (3) against the die core (2), the core receiving member cross-section (QA) of the reinforcement body (3) being decreased.

3. Method according to claim 2, **characterised in that** the reinforcement body (3) is applied to the die core (2) so as to produce a radial pretensioning of the reinforcement body (3) against the die core (2)
• by the core cross-section (QM) of the die core (2) being decreased with respect to a core cross-section for use which is present in a state for use of the die core (2) for producing the readiness for assembly of the reinforcement body (3) and the die core (2), and
• by, after the reinforcement body (3) and the die core (2) have been joined so as to produce the radial pretensioning of the reinforcement body (3) against the die core (2), the core receiving member cross-section (QA) of the reinforcement body (3) being decreased and the core cross-section (QM) of the die core (2) being increased.

4. Method according to any of the preceding claims, **characterised in that** the reinforcement body (3) made of fibre-reinforced plastics material is applied directly to the die core (2) so as to produce a radial pretensioning of the reinforcement body (3) against the die core (2).

5. Method according to at least claim 1 or claim 3, **characterised in that** the core cross-section (QM) of the die core (2) is decreased with respect to the core cross-section for use by the die core (2) being extended along the working movement axis (5) of the die core (2), preferably resiliently extended, with respect to the state for use.

6. Method according to at least claims 1 or claim 3, **characterised in that** the core cross-section (QM) of the die core (2) is decreased with respect to the core cross-section for use by the temperature of the die core (2) being changed with respect to the temperature in the state for use of the die core (2).

7. Method according to at least claim 2 or claim 3, **characterised in that** the core receiving member cross-section (QA) of the reinforcement body (3) is increased with respect to the initial core receiving member cross-section by the temperature of the reinforcement body (3) being changed with respect to the temperature in the initial assembly state of the reinforcement body (3).

8. Method according to any of the preceding claims, **characterised in that** a reinforcement body (3) made of carbon-fibre-reinforced plastics material is applied to the die core (2) so as to produce a radial pretensioning of the reinforcement body (3) against the die core (2).

## Revendications

1. Procédé de fabrication d'une matrice de formage (1) destinée au formage sous pression de pièces, dans le cadre duquel une âme de matrice (2) de la matrice de formage (1) est pourvue sur le côté extérieur d'une armature d'âme sous la forme d'un corps d'armature (3) en plastique renforcé par fibres de telle sorte que le corps d'armature (3) disposé sur l'âme de matrice (2) entoure l'âme de matrice (2) dans la direction périphérique de l'âme de matrice (2) autour d'un axe de mouvement de travail (5) de l'âme de matrice (2), axe le long duquel s'étend, à l'intérieur de l'âme de matrice (2), un élément récepteur de pièce (4) de l'âme de matrice (2), sachant que le corps d'armature (3) présente une matrice de plastique et une structure (9) de fibres de renforcement qui est incorporée dans la matrice de plastique et s'étend dans la direction périphérique de l'âme de matrice (2), sachant que le corps d'armature (3) est apposé sur l'âme de matrice (2) en produisant une précontrainte radiale du corps d'armature (3) contre l'âme de matrice (2), de sorte que l'armature d'âme disposée sur l'âme de matrice (2) est précontrainte radialement contre l'âme de matrice (2) transversalement à l'axe de mouvement de travail (5), et sachant que le corps d'armature (3) est apposé sur l'âme de matrice (2) en produisant une précontrainte radiale du corps d'armature (3) contre l'âme de matrice (2) par le fait qu'une section d'âme (QM) de l'âme de matrice (2), s'étendant perpendiculairement à l'axe de mouvement de travail (5), est réduite à une section d'âme de montage par rapport à une section d'âme d'utilisation présente dans un état d'utilisation de l'âme de matrice (2),
**caractérisé en ce que** le corps d'armature (3) est apposé sur l'âme de matrice (2) en produisant une précontrainte radiale du corps d'armature (3) contre l'âme de matrice (2)
- par le fait que le plastique renforcé par fibres est apposé dans l'état non durci sur le côté extérieur de l'âme de matrice (2) présentant la section d'âme de montage, de telle sorte que la structure (9) de fibres de renforcement du plastique renforcé par fibres s'étend dans la direction périphérique de l'âme de matrice (2) présentant la section d'âme de montage,
- et par le fait que la section d'âme (QM) de l'âme de matrice (2) est, à la suite du durcissement du plastique renforcé par fibres apposé sur le côté extérieur de l'âme de matrice (2), augmentée à la section d'âme d'utilisation.

2. Procédé de fabrication d'une matrice de formage (1) destinée au formage sous pression de pièces, dans le cadre duquel une âme de matrice (2) de la matrice de formage (1) est pourvue sur le côté extérieur d'une armature d'âme sous la forme d'un corps d'armature (3) en plastique renforcé par fibres de telle sorte que le corps d'armature (3) disposé sur l'âme de matrice (2) entoure l'âme de matrice (2) dans la direction périphérique de l'âme de matrice (2) autour d'un axe de mouvement de travail (5) de l'âme de matrice (2), axe le long duquel s'étend, à l'intérieur de l'âme de matrice (2), un élément récepteur de pièce (4) de l'âme de matrice (2), sachant que le corps d'armature (3) présente une matrice de plastique et une structure (9) de fibres de renforcement qui est incorporée dans la matrice de plastique et s'étend dans la direction périphérique de l'âme de matrice (2), sachant que le corps d'armature (3) est apposé sur l'âme de matrice (2) en produisant une précontrainte radiale du corps d'armature (3) contre l'âme de matrice (2), de sorte que l'armature d'âme disposée sur l'âme de matrice (2) est précontrainte radialement contre l'âme de matrice (2) transversalement à l'axe de mouvement de travail (5), et sachant que le corps d'armature (3) est apposé sur l'âme de matrice (2) en produisant une précontrainte radiale du corps d'armature (3) contre l'âme de matrice (2)
- par le fait que le corps d'armature (3) est réalisé sous la forme d'un corps creux durci qui présente à l'intérieur un élément récepteur d'âme (7) pour l'âme de matrice (2), sachant que l'élément récepteur d'âme (7) du corps d'armature (3) présente un axe (8) d'élément récepteur d'âme s'étendant, dans la position d'installation de l'âme de matrice (2), le long de l'axe de mouvement de travail (5) de l'âme de matrice (2), sachant que l'élément récepteur d'âme (7) du corps d'armature (3) présente, le long de l'axe (8) d'élément récepteur d'âme, au moins sur un côté une ouverture (11) d'élément récepteur d'âme, et sachant que l'élément récepteur d'âme (7) du corps d'armature (3) possède, dans un état initial de montage du corps d'armature (3), une section initiale d'élément récepteur d'âme s'étendant perpendiculairement à l'axe (8) d'élément récepteur d'âme,
- par le fait qu'on réalise un état prêt au montage du corps d'armature (3) et de l'âme de matrice (2),
- et par le fait que le corps d'armature (3) prêt au montage et l'âme de matrice (2) prête au montage sont assemblés, sachant que l'âme de matrice (2) prête au montage est introduite par l'ouverture (11) d'élément récepteur d'âme du corps d'armature (3) prêt au montage, le long de l'axe (8) d'élément récepteur d'âme, dans l'élément récepteur d'âme (7) du corps d'armature (3) prêt au montage, et que le corps d'armature (3) est ainsi disposé sur le côté extérieur de l'âme de matrice (2),
**caractérisé en ce que** le corps d'armature (3) est apposé sur l'âme de matrice (2) en produisant une précontrainte radiale du corps d'armature (3) contre l'âme de matrice (2)
- par le fait que l'état prêt au montage du corps d'armature (3) et de l'âme de matrice (2) est réalisé par le fait que la section (QA) d'élément récepteur d'âme du corps d'armature (3) est augmentée par rapport à la section initiale d'élément récepteur d'âme, sachant que la section (QA) d'élément récepteur d'âme du corps d'armature (3) prêt au montage est dimensionnée de telle sorte que la section d'âme (QM) de l'âme de matrice (2) prête au montage se situe en dedans de la section (QA) d'élément récepteur d'âme dans la projection verticale sur la section (QA) d'élément récepteur d'âme,
- et par le fait que la section (QA) d'élément récepteur d'âme du corps d'armature (3) est réduite à la suite de l'assemblage du corps d'armature (3) et de l'âme de matrice (2) en produisant la précontrainte radiale du corps d'armature (3) contre l'âme de matrice (2).

3. Procédé selon la revendication 2, **caractérisé en ce que** le corps d'armature (3) est apposé sur l'âme de matrice (2) en produisant une précontrainte radiale du corps d'armature (3) contre l'âme de matrice (2)
- par le fait que, afin de réaliser l'état prêt au montage du corps d'armature (3) et de l'âme de matrice (2), la section d'âme (QM) de l'âme de matrice (2) est réduite par rapport à une section d'âme d'utilisation présente dans un état d'utilisation de l'âme de matrice (2),
- et par le fait que la section (QA) d'élément récepteur d'âme du corps d'armature (3) est réduite et la section d'âme (QM) de l'âme de matrice (2) est augmentée à la suite de l'assemblage du corps d'armature (3) et de l'âme de matrice (2) en produisant la précontrainte radiale du corps d'armature (3) contre l'âme de matrice (2).

4. Procédé selon l'une des revendications précédentes, **caractérisé en ce que** le corps d'armature (3) en plastique renforcé par fibres est directement apposé sur l'âme de matrice (2) en produisant une précontrainte radiale du corps d'armature (3) contre l'âme de matrice (2).

5. Procédé selon au moins la revendication 1 ou la revendication 3, **caractérisé en ce que** la section d'âme (QM) de l'âme de matrice (2) est réduite par rapport à la section d'âme d'utilisation par le fait que l'âme de matrice (2) est allongée le long de l'axe de mouvement de travail (5) de l'âme de matrice (2) par rapport à l'état d'utilisation, de préférence allongée élastiquement.

6. Procédé selon au moins la revendication 1 ou la revendication 3, **caractérisé en ce que** la section d'âme (QM) de l'âme de matrice (2) est réduite par rapport à la section d'âme d'utilisation par le fait que la température de l'âme de matrice (2) est modifiée par rapport à la température dans l'état d'utilisation de l'âme de matrice (2).

7. Procédé selon au moins la revendication 2 ou la revendication 3, **caractérisé en ce que** la section (QA) d'élément récepteur d'âme du corps d'armature (3) est augmentée par rapport à la section initiale d'élément récepteur d'âme par le fait que la température du corps d'armature (3) est modifiée par rapport à la température dans l'état initial de montage du corps d'armature (3).

8. Procédé selon l'une des revendications précédentes, **caractérisé en ce qu'**un corps d'armature (3) en plastique renforcé par fibres de carbone est apposé sur l'âme de matrice (2) en produisant une précontrainte radiale du corps d'armature (3) contre l'âme de matrice (2).
